# FASCICULE DE BREVET EUROPEEN

(11) **EP 0 994 006 B1**
(45) Date de publication et mention de la délivrance du brevet: **04.06.2003**
(21) Numéro de dépôt: 99420208.3
(22) Date de dépôt: 14.10.1999
(51) Int. Cl.: B62D 25/08, B62D 29/00

(54) **Procédé de fabrication d'une face avant de véhicule automobile et face avant apte à être fabriquée par ce procédé**
Verfahren zum Herstellen eines Tragwerks für die Frontseite von Kraftfahrzeugen ,und Tragwerk für die Frontseite von Kraftfahrzeugen hergestellt durch dieses Verfahren
Method of manufacturing of an motor car front end, and motor car front end manufactured by this method

(30) Priorité: 16.10.1998 FR 9813163
(43) Date de publication de la demande: 19.04.2000
(73) Titulaire: Inoplast, 07340 Saint Desirat (FR)
(72) Inventeur: Martin, Laurent, 07340 Peaugres (FR)
(74) Mandataire: Myon, Gérard Jean-Pierre

(56) Documents cités:
- EP-A- 0 658 470
- FR-A- 2 761 331
- US-A- 5 658 041

## Description

L'invention a trait à un procédé de fabrication d'une face avant de véhicule automobile et à une telle face avant.

Une face avant est classiquement montée à l'avant du compartiment moteur d'un véhicule automobile, entre les longerons ou les bras du châssis, et supporte généralement un radiateur et un système de verrouillage en position fermée du capot du véhicule.

Pendant de nombreuses années, les faces avant ont été réalisées en métal, mais il s'est avéré que l'usage du métal limitait les formes susceptibles d'être utilisées. On a alors réalisé des faces avant de véhicule automobile en matière plastique, notamment en résine polyamide, éventuellement chargée en fibres de renfort. Ces faces avant en matière plastique présentent l'inconvénient notable de se déformer de façon importante en cas de choc, au point que la serrure qu'elles supportent peut être désolidarisée de la partie correspondante du capot.

Par la demande de brevet européen 0 370 342, il est connu de réaliser un élément de construction léger, notamment pour un véhicule automobile, qui est composé d'un corps de base en forme de coquille et de nervures de renforcement en matière plastique injectée. Cet élément est réalisé par surmoulage du corps de base avec une résine polyamide chargée de fibres de verre, ce qui induit un coût relativement élevé du fait du prix de la matière première utilisée. En outre, le surmoulage implique nécessairement que le corps de base soit mis en forme avec une grande précision pour ne pas interférer avec le moule lors de la fermeture de celui-ci. En effet, des variations dimensionnelles du corps de base pourrait résulter dans un coincement du moule, voire dans l'endommagement de la matrice ou du poinçon. En outre, les points d'injection de la matière plastique dans le moule autour du corps de base doivent être positionnés avec précision, et l'écoulement de la matière plastique est fortement perturbé en cas de positionnement d'un obstacle devant ces points d'injection. Enfin, le chargement et le déchargement du moule sont relativement longs du fait du positionnement nécessairement précis du corps de base avant fermeture du moule.

Par la demande de brevet européen 0 658 470, il est connu de réaliser un bâti support pour une façade de véhicule automobile dans lequel une charpente peut être fixée dans des rainures, gorges ou logements d'un panneau frontal globalement plan. L'encastrement de la charpente dans le panneau ne lui permet pas de rigidifier efficacement ce panneau.

FR-A-2 761 331, qui sert de base à la présentation en deux parties des revendications 1 et 5, divulgue un module d'extrémité avant de véhicule automobile dans lequel un panneau en matière plastique est monté sur deux longerons du véhicule et est renforcé, en partie haute uniquement, par un renforcement métallique. La rigidité de ce module n'est pas optimale.

C'est à ces inconvénients qu'entend remédier l'invention, en proposant un procédé de fabrication et une face avant de véhicule automobile qui sont particulièrement économiques, sans risque d'interférence des pièces avec un moule ou un robot manipulateur, alors que la résistance aux chocs de la pièce obtenue est tout à fait satisfaisante.

Dans cet esprit, l'invention concerne un procédé de fabrication d'une face avant pour véhicule automobile, dans lequel on forme une armature par emboutissage d'une plaque métallique, on moule une pièce en matière plastique formant support fonctionnel et on assemble cette armature et cette pièce par introduction de ladite pièce dans un volume de réception défini par ladite armature et par fixation mécanique ou soudage par ultrasons, caractérisé en ce que, lors de l'assemblage de l'armature et de la pièce précitées, on constitue avec ces deux éléments un corps creux.

Grâce au procédé de l'invention, l'armature métallique peut être réalisée par des techniques classiques d'emboutissage, c'est-à-dire avec une grande cadence, donc un prix de revient bien maîtrisé, les tolérances de fabrication étant conformes aux règles de l'art. Par ailleurs, la pièce de structure formant support fonctionnel peut être moulée selon les techniques classiques et éprouvées, également avec des tolérance conformes aux règles de l'art. L'assemblage mécanique ou soudage de ces pièces permet de rattraper les éventuels défauts dimensionnels, de sorte que la pièce obtenue présente une géométrie définie avec précision. Grâce à l'introduction de la pièce en matière plastique dans le volume défini par l'armature, il est formé un corps creux bi-couche autour d'une partie au moins de la pièce en matière plastique, de telle sorte que la rigidité de l'ensemble obtenu est améliorée, ce qui assure que la serrure du capot reste efficace, y compris en cas de choc violent.

Selon des variantes de réalisation de l'invention, on peut prévoir d'assembler l'armature et la pièce formant support fonctionnel par clipsage, coopération de formes, rivetage, clinchage, bouterollage, agrafage ou boulonnage. Ces différentes techniques éprouvées peuvent être mises en oeuvre avec une excellente fiabilité et dans des conditions économiques satisfaisantes.

Selon un aspect avantageux de l'invention, le procédé consiste à équiper l'armature et/ou la pièce formant support avec des éléments fonctionnels du véhicule, avant assemblage de l'armature et de la pièce formant support. Ces éléments fonctionnels peuvent être constitués de la serrure de fermeture du capot, d'éléments appartenant au groupe moto-ventilateur, de câbles électriques, de conduits de fluide et/ou d'éléments des optiques de phares du véhicule. Grâce à cet aspect de l'invention, les éléments variables d'un véhicule à l'autre, notamment en fonction du niveau d'équipement, peuvent être pré-assemblés soit sur l'armature, soit sur la pièce formant support, l'assemblage final étant réalisé en fonction du type de face avant à obtenir.

Selon un autre aspect avantageux de l'invention, le procédé consiste à mouler la pièce formant support fonctionnel par injection ou compression de résine polyester. L'utilisation de résine polyester permet d'obtenir un prix de revient très avantageux dans la mesure où la résine polyester a un coût relativement faible, notamment en comparaison avec la résine polyamide.

L'invention concerne également une face avant de véhicule automobile pouvant être fabriquée grâce au procédé décrit ci-dessus et, plus spécifiquement, une face avant de véhicule automobile qui comporte une armature métallique de forme concave et définissant un logement de réception d'une partie au moins d'une pièce en matériau plastique moulé, formant support fonctionnel et assemblée avec cette armature par fixation mécanique ou au soudage par ultrasons. Cette face avant est caractérisée en ce que l'armature et la pièce précitées constituent ensemble un corps creux de la pièce formant support.

Selon des aspects avantageux de l'invention, cette face avant incorpore une ou plusieurs des caractéristiques suivantes :
- la pièce formant support et/ou l'armature est pourvue de moyens de fixation et/ou de support d'éléments fonctionnels du véhicule ;
- l'assemblage entre l'armature et la pièce formant support est amovible ;
- la concavité de l'armature est tournée vers le compartiment moteur du véhicule ;
- un habillage est monté sur l'armature et/ou la pièce formant support, cet habillage formant une cloison anti-recyclage de l'air du compartiment moteur du véhicule ;
- la pièce formant support et/ou l'habillage est spécifiquement adapté au type du véhicule et à son équipement, alors que l'armature est compatible avec différents types de véhicules ou avec des véhicules de niveaux d'équipement différents.

L'invention sera mieux comprise et d'autres avantages de celle-ci apparaîtront plus clairement à la lumière de la description qui va suivre d'un mode de réalisation d'une face avant de véhicule automobile et de son procédé de fabrication, donnée uniquement à titre d'exemple et faite en référence aux dessins annexés dans lesquels :

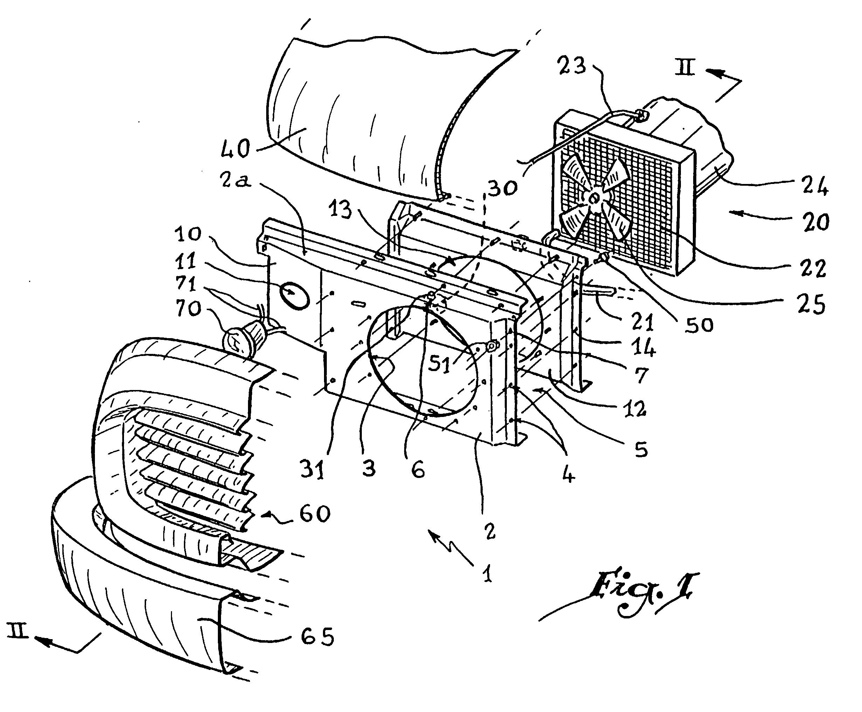

- la figure 1 est une vue en perspective éclatée d'une face avant de véhicule automobile conforme à l'invention ;
- la figure 2 est une vue en perspective, à plus grande échelle, de l'armature et de la pièce formant support de la face avant de la figure 1 et
- la figure 3 est une coupe longitudinale selon la ligne II-II de la face avant de la figure 1, en position montée.

La face avant 1 du véhicule automobile représenté aux figures comprend une armature métallique 2 conformée par emboutissage à partir d'une tôle de faible épaisseur, par exemple une tôle d'épaisseur comprise entre 0,5 et 1,5 millimètres. L'armature 2 comprend un évidemment central 3 et des perçages 4 dont la fonction apparaîtra plus clairement dans ce qui suit. La géométrie de l'armature 2 est telle que sa concavité est tournée vers le compartiment moteur du véhicule, de sorte qu'elle définit un volume 5 de réception partielle d'une pièce 12 en résine polyester moulée par injection. La pièce 12 est une structure de support fonctionnel d'éléments de la face avant 1.

Selon une variante de l'invention, la pièce 12 peut également être réalisée en résine thermoplastique. La pièce 12 comprend un évidement central 13 dont la géométrie est sensiblement équivalente à celle de l'évidement 3 de l'armature 2, les évidements 3 et 13 étant prévus pour être globalement alignés l'un avec l'autre.

La pièce 12 porte également plusieurs cheminées de bouterollage 14 réparties en regard des perçages 4 de l'armature 2. Grâce aux éléments 4 et 14, il est possible d'assembler mécaniquement, par bouterollage, l'armature 2 et la pièce formant support 12.

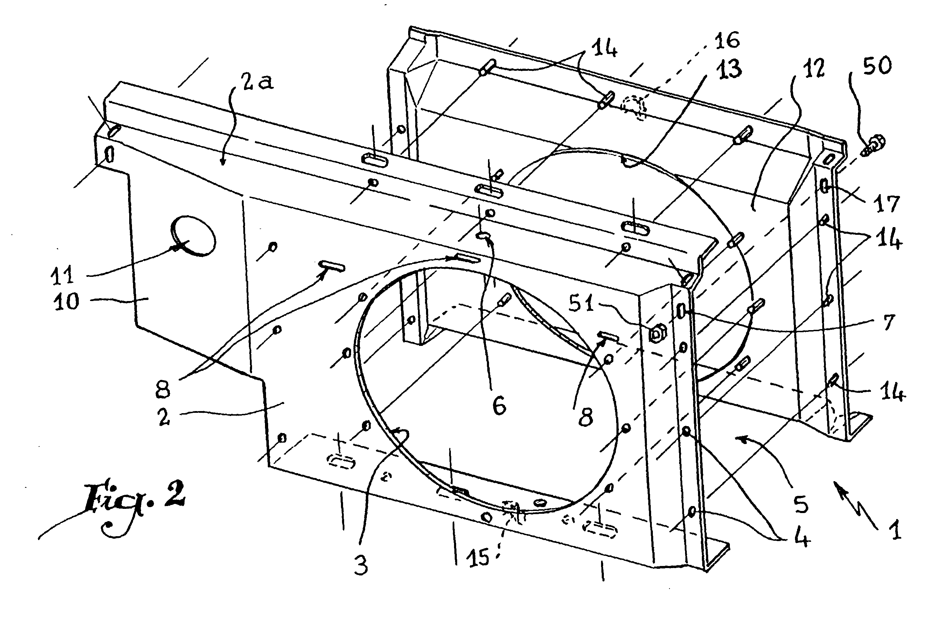

Un groupe moto-ventilateur 20 est prévu pour être monté sur la pièce 12. Pour ce faire, la pièce 12 porte des pattes 15 de fixation et de support de conduits 21 d'alimentation en liquide de refroidissement du radiateur 22 du groupe moto-ventilateur 20. Une seule patte 15 est visible à la figure 2, mais il est bien entendu que plusieurs pattes peuvent être prévues en fonction du nombre et de la géométrie des conduits 21. De la même manière, plusieurs attaches, dont une seule est visible à la figure 2 avec la référence 16, sont prévues sur la surface de la pièce 12 tournée vers le compartiment moteur afin d'immobiliser des câbles électriques 23 d'alimentation d'un moteur 24 d'entraînement en rotation d'un ventilateur 25 du groupe moto-ventilateur 20.

Pour faciliter le montage des éléments 20 à 25, il est possible d'équiper la pièce 12 avec l'ensemble de ces éléments, préalablement à son assemblage avec l'armature 2. L'opérateur peut travailler à plat, essentiellement sur un seul côté de la pièce 12, ce qui facilite son travail et diminue les risques d'erreur.

De la même manière, l'armature 2 supporte une serrure 30 destinée à coopérer avec un capot 40. La serrure 30 est logée sous un voile supérieur 2a de l'armature 2, à l'intérieur du volume 5, alors qu'un fût 31 de la serrure 30 traverse un orifice 6 de l'armature 2. Le montage de la serrure 30 sur l'armature 2 est réalisé avant l'assemblage de cette armature avec la pièce 12.

Après introduction partielle de la pièce 12 dans le volume 5, les cheminées de bouterollage 14 sont déformées afin de verrouiller ensemble les éléments 2 et 12.

D'autres techniques de fixation mécanique peuvent être envisagées pour l'assemblage des éléments 2 et 12. En particulier, la coopération de formes, l'agrafage ou le clipsage permettent d'obtenir des résultats satisfaisants, alors que l'assemblage réalisé est amovible. Il est également possible de procéder par rivetage ou clinchage, c'est-à-dire rivetage par déformation orbitale, ce qui est particulièrement rapide et efficace.

Enfin, la technique du boulonnage peut également être utilisée seule ou en combinaison avec l'une des techniques évoquées précédemment, comme représenté par la vis 50 et l'écrou 51 visibles à la figure 2 et prévus pour être montés ensemble après passage de la vis 50 à travers deux orifices 7 et 17 des éléments 2 et 12. Avantageusement, le ou les écrous 51 peuvent être fixés sur l'armature 2 lors de sa mise en forme par emboutissage.

Selon une autre technique et compte tenu de la nature des matériaux utilisés, on peut assembler les éléments 2 et 12 par soudage par ultrasons, ce qui est une technique rapide et éprouvée.

Dans tous les cas, il est possible de combiner les techniques évoquées ci-dessus ou d'utiliser une seule d'entre elles, en fonction de la géométrie et de la taille des éléments à assembler.

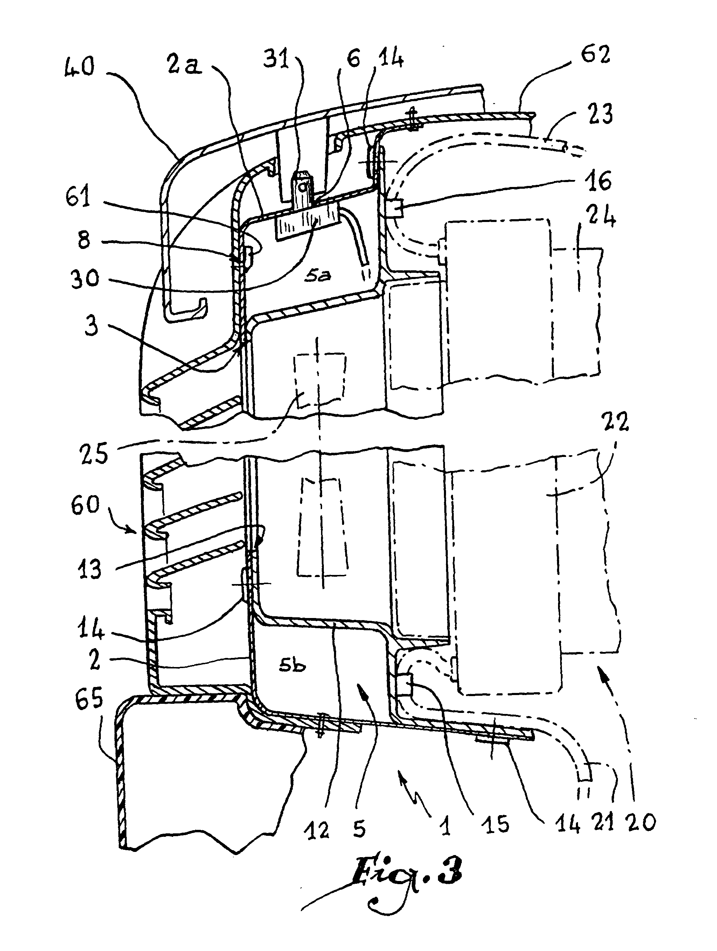

Du fait de l'introduction de la pièce 12 dans le volume 5 et compte tenu des dimensions respectives du volume 5 et de la partie de la pièce 12 introduite dans ce volume, il est formé des canaux supérieur et inférieur 5a et 5b entre les éléments 2 et 12, la serrure 30 étant installée dans la canal 5a comme cela ressort de la figure 3. Ainsi, les éléments 2 et 12 forment ensembles un corps creux dont l'inertie est supérieure à celle d'un corps non creux, ce qui lui permet de résister plus efficacement aux efforts auxquels il est soumis, notamment en cas de choc violent car l'armature 2 enveloppe partiellement la pièce 12. Bien entendu, d'autres canaux, du type des canaux 5a et 5b peuvent être prévus, par exemple sur la gauche et sur la droite de la pièce 12, à l'intérieur du volume 5.

Une calandre 60 est prévue pour être fixée en partie supérieure de l'armature 2 et de la pièce 12, afin de constituer un élément décoratif du véhicule et une grille d'entrée d'air et de protection du ventilateur 25. La calandre 60 peut être fixée sur l'armature 2 par tout moyen approprié et, par exemple, par clipsage grâce à des pattes 61 prévues pour pénétrer dans des orifices correspondants 8 de l'armature 2.

En partie supérieure, la calandre 60 se prolonge par une aile 62 formant cloison anti-recyclage de l'air du compartiment moteur du véhicule, ce qui permet d'éviter une recirculation de l'air chauffé par le moteur qui réduirait l'efficacité du système de refroidissement du moteur.

Un pare-chocs 65 est prévu pour être monté, au-dessous de la calandre 60, sur la face avant 1.

Comme il ressort plus clairement de la figure 2, l'armature 2 n'est pas symétrique par rapport à un plan vertical passant par le centre de l'évidement 3. Elle comprend une aile latérale 10 pourvue d'un évidement 11 de réception d'une optique de phare 70. Le faisceau électrique 71 de l'optique de phare 70 peut être immobilisé par rapport à l'armature 2 ou à la pièce 12 grâce à des attaches du type de l'attache 16. Bien entendu, il serait également possible de prévoir que l'armature 2 comprenne une seconde aile pour la réception d'une seconde optique de phare.

Compte tenu de ce qui précède, il est possible de créer une face avant 1 intégrant un grand nombre de fonctions, avant le montage de cette face avant sur le véhicule.

Grâce à l'armature 2, cette face avant est susceptible de résister aux chocs que pourrait subir le véhicule et, notamment, aux essais destructifs de sécurité prévus par les normes. L'armature 2 est une pièce de géométrie relativement simple, donc de prix de revient attractif, car elle n'est pas directement en contact avec les éléments du moteur du véhicule.

On peut prévoir qu'une armature 2 est utilisable avec plusieurs types de véhicules ou avec tous les véhicules d'une type donné, quel que soit leur niveau d'équipement. La pièce 12, qui peut être fabriquée en plus petite série avec une beaucoup plus grande souplesse, est quant à elle définie en fonction du type exact du véhicule et de son équipement, par exemple de la présence ou non d'une unité de climatisation ou d'une unité d'assistance de direction dont la fixation peut être prévue, sur la face de la pièce 12 tournée vers le compartiment moteur, au moyen d'attaches appropriées.

L'invention permet donc d'obtenir une grande modularité dans la fabrication des faces avant, étant entendu que les armatures 2 peuvent être préparées sur leur site d'emboutissage avec les éléments 30 et 70, alors que les différentes pièces 12 formant support fonctionnel peuvent être équipées, sur leur site de moulage, des accessoires correspondants exactement aux véhicules à fabriquer. L'assemblage de l'armature 2 et de la pièce 12 équipées peut avoir lieu sur le site de production du véhicule, en fonction du plan de charge du constructeur automobile, ou chez un équipementier.

De la même manière, la calandre 60 peut être spécifiquement adaptée au type de véhicule et à son niveau d'équipement, par exemple en intégrant des logements pour des phares antibrouillard, cette calandre étant assemblée sur l'armature 2 et/ou la pièce 12 simultanément à leur assemblage ou postérieurement à celui-ci.

Dans tous les cas, l'armature 2 et la pièce 12 peuvent être réalisées avec des tolérances conformes aux usages de leurs domaines techniques respectifs, l'assemblage mécanique ou le soudage par ultrasons permettant de telles tolérances. L'assemblage de l'armature 2 et de la pièce 12 peut être réalisé manuellement ou de façon automatique.

## Revendications

1. Procédé de fabrication d'une face avant pour véhicule automobile, dans lequel on forme une armature (2) par emboutissage d'une plaque métallique, on moule une pièce (12) en matière plastique formant support fonctionnel et on assemble ladite armature et ladite pièce par introduction de ladite pièce (12) dans un volume de réception (5) défini par ladite armature (2) et par fixation mécanique (14, 50, 51) ou soudage par ultrasons, **caractérisé en ce que**, lors de l'assemblage de ladite armature (2) de ladite pièce en matière plastique (12), on constitue avec ces deux éléments un corps creux.

2. Procédé selon la revendication 1, **caractérisé en ce qu'**il consiste à assembler ladite armature (2) et ladite pièce (12) formant support par clipsage, coopération de formes, rivetage, clinchage, bouterollage, agrafage ou boulonnage.

3. Procédé selon l'une des revendications 1 ou 2, **caractérisé en ce qu'**il consiste à équiper ladite armature (2) et/ou ladite pièce (12) formant support d'éléments fonctionnels (20-25, 30, 70) du véhicule avant assemblage de ladite armature et de ladite pièce formant support.

4. Procédé selon l'une des revendications 1 à 3, **caractérisé en ce qu'**il consiste à mouler ladite pièce (12) formant support fonctionnel (12) par injection ou par compression de résine polyester.

5. Face avant (1) de véhicule automobile comportant une armature métallique (2) de forme concave et définissent un logement (5) de réception d'une partie au moins d'une pièce (12) en matériau plastique moulée, formant support fonctionnel et assemblée avec ladite armature par fixation mécanique ou soudage par ultrasons, **caractérisée en ce que** ladite armature (2) et ladite pièce (12) constituent ensemble un corps creux.

6. Face avant selon la revendication 5, **caractérisée en ce que** ladite pièce (12) formant support et/ou ladite armature (2) est pourvue de moyens (6, 15, 16) de fixation et/ou de support d'éléments fonctionnels (20-25, 30, 70) du véhicule.

7. Face avant selon l'une des revendications 5 ou 6, **caractérisée en ce que** l'assemblage entre ladite armature (2) et ladite pièce (12) formant support est amovible.

8. Face avant selon l'une des revendications 5 à 7, **caractérisée en ce que** la concavité de ladite armature (2) est tournée vers le compartiment moteur du véhicule.

9. Face avant selon l'une des revendications 5 à 8, **caractérisée en ce qu'**elle comprend un habillage (60) monté sur ladite armature (2) et/ou ladite pièce (12) formant support, ledit habillage formant une cloison anti-recyclage (62) de l'air du compartiment moteur du véhicule.

10. Face avant selon l'une des revendications 5 à 9, **caractérisée en ce que** ladite pièce (12) formant support et/ou ledit habillage (60) est spécifiquement adapté au type du véhicule et à son équipement, alors que ladite armature (2) est compatible avec différents types de véhicules ou avec des véhicules de niveaux d'équipement différents.

## Claims

1. Method of manufacturing a front end for an automotive vehicle, wherein a framework (2) is formed by pressing a metal plate, a plastics material part (12) is moulded to form an operational support, and said framework and said part are assembled by introducing said part (12) into a reception chamber (5), which is defined by said framework (2), and by a mechanical securement (14, 50, 51) or by ultrasound welding, **characterised in that**, when said framework (2) is assembled with said plastics material part (12), a hollow body is formed with these two components.

2. Method according to claim 1, **characterised in that** it comprises assembling said framework (2) and said support-forming part (12) by clipping, form-fitting, riveting, jointing, snapping, stapling or bolting.

3. Method according to one of claims 1 or 2, **characterised in that** it comprises fitting said framework (2) and/or said support-forming part (12) with operational components (20 - 25, 30, 70) of the vehicle prior to assembling said framework and said support-forming part.

4. Method according to one of claims 1 to 3, **characterised in that** it comprises moulding said part (12), which forms the operational support (12), by injection or by compression of polyester resin.

5. Front end (1) of an automotive vehicle, which comprises a metal framework (2) of concave configuration and defines a housing (5) for accommodating one portion at least of a moulded plastics material part (12), which forms an operational support and is assembled with said framework by a mechanical securement or by ultrasound welding, **characterised in that** said framework (2) and said part (12) together form a hollow body.

6. Front end according to claim 5, **characterised in that** said support-forming part (12) and/or said framework (2) are/is provided with means (6, 15, 16) for securing and/or for supporting operational components (20 - 25, 30, 70) of the vehicle.

7. Front end according to one of claims 5 or 6, **characterised in that** the assembly between said framework (2) and said support-forming part (12) is detachable.

8. Front end according to one of claims 5 to 7, **characterised in that** the concavity of said framework (2) is orientated towards the engine compartment of the vehicle.

9. Front end according to one of claims 5 to 8, **characterised in that** it comprises a covering (60), which is mounted on said framework (2) and/or said support-forming part (12), said covering forming an anti-recycling partition (62) for the air from the engine compartment of the vehicle.

10. Front end according to one of claims 5 to 9, **characterised in that** said support-forming part (12) and/or said covering (60) are/is specifically adapted to the type of the vehicle and to its equipment, while said framework (2) is compatible with various types of vehicles or with vehicles with different levels of equipment.

## Patentansprüche

1. Verfahren zur Herstellung einer Frontseite für ein Kraftfahrzeug, bei dem man durch ziehen einer Metallplatte eine Verstärkung (2) bildet, ein eine funktionelle Stütze bildendes Teil (12) aus Kunststoff formt und die Verstärkung und das Teil durch Einführung des Teils (12) in ein durch die Verstärkung (2) und durch mechanische Befestigung (14, 50, 51) oder Ultraschallschweißen definiertes Aufnahmevolumen (5) zusammenfügt, **dadurch gekennzeichnet, dass** man beim Zusammenfügen der Verstärkung (2) und des Kunststoffteils (12) mit diesen beiden Elementen einen Hohlkörper bildet.

2. Verfahren nach Anspruch 1, **dadurch gekennzeichnet, dass** man die Verstärkung (2) und das die Stütze bildende Teil (12) durch Klemmen, Zusammenwirkung von Formen, Nieten, Rastverbindung, Anstauchen der Enden von Hohlschäften, Zusammenheften oder Verschrauben zusammenfügt.

3. Verfahren nach Anspruch 1 oder 2, **dadurch gekennzeichnet, dass** man die Verstärkung (2) und/oder das die Stütze bildende Teil (12) vor dem Zusammenfügen der Verstärkung und des die Stütze bildenden Teile mit funktionellen Elementen (20-25, 30, 70) des Fahrzeugs versieht.

4. Verfahren nach einem der Ansprüche 1 bis 3, **dadurch gekennzeichnet, dass** man das die funktionelle Stütze (12) bildende Teil (12) durch Spritzgießen oder Formpressen von Polyesterharz formt.

5. Kraftfahrzeugfrontseite (1) mit einer Metall Verstärkung (2) konkaver Form, die eine Aufnahme (5) zum Aufnehmen mindestens eines Teils eines aus Kunststoff geformten Teils definiert, das eine funktionelle Stütze bildet und durch mechanische Befestigung oder Ultraschallschweißen mit der Verstärkung zusammengefügt ist, **dadurch gekennzeichnet, dass** die Verstärkung (2) und das Teil (12) zusammen einen Hohlkörper bilden.

6. Frontseite nach Anspruch 5, **dadurch gekennzeichnet, dass** das die Stütze bildende Teil (12) und/oder die Verstärkung (2) mit Mitteln (6, 15, 16) zur Befestigung und/oder zur Abstützung Von funktionellen Elementen (20-25, 30, 70) des Fahrzeuge versehen sind.

7. Frontseite nach Anspruch 5 oder 6, **dadurch gekennzeichnet, dass** die Verbindung zwischen der Verstärkung (2) und dem die Stütze bildenden Teil. (12) lösbar ist.

8. Frontseite nach einem der Ansprüche 5 bis 7, **dadurch gekennzeichnet, dass** die Konkavität der Verstärkung (2) zum Motorraum des Fahrzeugs weist.

9. Frontseite nach einem der Ansprüche 5 bis 8, **dadurch gekennzeichnet, dass** sie eine Verkleidung (60) umfasst, die an der Verstärkung (2) und/oder dem die Stütze bildenden Teil (12) angebracht ist, wobei die Verkleidung eine die Rückführung von Luft aus dem Motorraum des Fahrzeugs verhindernde Trennwand (62) bildet.

10. Frontseite nach einem der Ansprüche 5 bis 9, **dadurch gekennzeichnet, dass** das die Stütze bildende Teil (12) und/oder die Verkleidung (60) besonders auf die Art des Fahrzeugs und seine Ausstattung abgestimmt ist, während die Verstärkung (2) mit verschiedenen Fahrzeugarten oder mit Fahrzeugen mit Verschiedenen Ausstattungsniveaus kompatibel ist.
